# EUROPÄISCHE PATENTSCHRIFT

(11) **EP 3 510 856 B1**
(45) Veröffentlichungstag und Bekanntmachung des Hinweises auf die Patenterteilung: **22.04.2020**
(21) Anmeldenummer: 18151716.0
(22) Anmeldetag: 15.01.2018
(51) Int. Cl.: A01F 12/46, A01D 61/00

(54) **ANTRIEBSEINHEIT FÜR EINEN KORNELEVATOR UND KORNELEVATOR-ANORDNUNG**
DRIVE UNIT FOR A GRAIN ELEVATOR AND GRAIN ELEVATOR ASSEMBLY
UNITÉ D'ENTRAÎNEMENT POUR UN ÉLÉVATEUR DE GRAINS ET INSTALLATION D'ÉLÉVATEUR DE GRAINS

(43) Veröffentlichungstag der Anmeldung: 17.07.2019
(73) Patentinhaber: Arnold Jäger Holding GmbH, 30625 Hannover (DE)
(72) Erfinder: Wolde, Harm-Jan van, 9992 TT Huizinge (NL); Carlson, Nicholas, Stanchfield, MN 55080 (US); Jäger, Sebastian, 30657 Hannover (DE)
(74) Vertreter: Bremer, Ulrich

(56) Entgegenhaltungen:
- EP-A1- 3 072 383
- WO-A1-2016/077588
- US-A- 6 053 811
- US-A1- 2014 106 831

## Beschreibung

Die Erfindung betrifft eine Antriebseinheit zum Antreiben eines Kornelevators, sowie eine Kornelevator-Anordnung mit einer derartigen Antriebseinheit, insbesondere für landwirtschaftliche Maschinen.

Landwirtschaftliche Maschinen, beispielsweise Mähdrescher, weisen unterschiedliche Fördereinrichtungen auf, von denen Saatgut, z.B. Maiskörner oder Getreidekörner, im Mähdrescher an unterschiedliche Positionen gefördert werden können. Demnach kann das Saatgut z.B. über einen Kornelevator senkrecht nach oben zu einem Korntank gefördert werden oder aber über einen Schrägförderer von einem Erntevorsatz in das Innere des Mähdreschers. Um die Fördereinrichtungen anzutreiben, sind endlose Zugmittel, z.B. Ketten oder Riemen vorgesehen, die auf Antriebsrädern, z.B. Kettenritzeln oder Riemenscheiben laufen und von diesen reibschlüssig und/oder formschlüssig mitgenommen werden, um ein Drehmoment auf das Zugmittel zu übertragen.

Zum Fördern von Saatgut durch einen Kornelevator sind ein oder mehrere in einem Gehäuse geführte Ketten vorgesehen, an denen Paddels oder Schaufelräder angeordnet sind. Werden die Ketten über ein Antriebsrad angetrieben, sorgen die Paddels oder Schaufelräder dafür, dass dem Kornelevator von unten zugeführtes Saatgut nach oben gefördert wird. Nachteilig hierbei ist, dass die angetriebenen Ketten und Kettenritzel im Betrieb des Kornelevators sehr laut sind und das Saatgut zudem an den Kettenritzeln gestaut werden kann, da sich diese im Förderweg des Saatgutes im unteren Bereich des Kornelevators befinden und demnach einen Widerstand für das "fließende" Saatgut darstellen. Zudem kann es zu Beschädigungen des Saatgutes kommen, wenn dieses zwischen das Kettenritzel und die Kette gelangt und dadurch zerdrückt wird. Weiterhin sind die Materialpaarungen der Ketten und Kettenritzel verschleißbehaftet, wodurch die Lebensdauer sowie die Zuverlässigkeit eingeschränkt sind.

Ein beispielhafter Mähdrescher ist beispielsweise in DE 10 2012 007 637 A1 beschrieben. Ein Kornelevator mit Paddels, die auf einer formschlüssig angetriebenen Kette sitzen, ist beispielsweise in DE 10 2016 217 169 A1 beschrieben.

Gemäß WO 2016/077588 A1 ist weiterhin ein Kornelevator mit einer Antriebseinheit gezeigt, die ein Antriebsrad und eine damit koaxial verbundene Förderschnecke aufweist, wobei die Förderschnecke das Antriebsrad antreibt. Das Antriebsrad weist Mitnahmemittel auf, die mit einem mehrere Paddel aufweisenden endlosen Zugmittel des Kornelevators formschlüssig und/oder reibschlüssig in Eingriff gebracht werden kann zum Antrieben des endlosen Zugmittels.

Aufgabe der Erfindung ist, eine Antriebseinheit für einen Kornelevator bereitzustellen, mit der ein Fördern von Saatgut in bzw. durch den Kornelevator in einfacher, langlebiger und zuverlässiger Weise sichergestellt werden kann. Weiterhin ist Aufgabe der Erfindung, eine Kornelevator-Anordnung mit einer derartigen Antriebseinheit bereitzustellen.

Diese Aufgabe wird durch eine Antriebseinheit nach Anspruch 1 sowie eine Kornelevator-Anordnung nach Anspruch 19 gelöst. In den Unteransprüchen sind bevorzugte Weiterbildungen angegeben.

Demnach ist vorgesehen, in ein mit einer Förderschnecke in Wirkverbindung stehendes Antriebsrad mehrere Durchtrittsöffnungen einzubringen, die derartig ausgebildet sind, dass ein Durchströmen von durch die Förderschnecke in den Kornelevator gefördertem Saatgut durch das Antriebsrad hindurch ermöglicht und/oder begünstigt wird.

Somit wird bereits der Vorteil erreicht, dass das Antriebsrad, das zum Antreiben eines endlosen Zugmittels im Kornelevator benötigt wird und das sich dazu im Förderweg des Saatgutes befindet, nur einen geringen Widerstand für das "fließende" Saatgut darstellt. Dies wird dadurch erreicht, dass das Saatgut mit nur wenig Widerstand durch die Durchtrittsöffnungen von der der Förderschnecke zugewandten Seite des Antriebsrades zu der gegenüberliegenden Seite des Antriebsrades gelangen kann und von dort aus weitergefördert werden kann. Dadurch entsteht insgesamt weniger Saatgutstau vor dem Antriebsrad, so dass der Wartungsaufwand des Kornelevators insgesamt minimiert werden kann. Durch die Drehbewegung des Antriebsrades kann das Saatgut je nach Anordnung und Form der Arme ergänzend nach Art eines axial fördernden Flügelrades oder Schneckenrades auch zusätzlich durch die Durchtrittsöffnungen des Antriebsrades pumpenartig gedrückt bzw. gefördert werden, wodurch die Bewegung des Saatgutes durch das Antriebsrad begünstigt wird.

Die Durchtrittsöffnungen sind dazu in einem Bereich des Antriebsrades ausgebildet, in dem sich Arme befinden, die für eine Befestigung bzw. Positionierung von Mitnahmemitteln auf einem Umfang des Antriebsrades sorgen. Die Mitnahmemittel dienen dazu, einen reibschlüssigen und/oder formschlüssigen Eingriff mit einem endlosen Zugmittel des Kornelevators derart zu gewährleisten, dass das endlose Zugmittel von dem angetriebenen Antriebsrad mitgenommen wird. Somit wird ein Bereich des Antriebsrades ausgespart, der nicht zwingend nötig ist, da über die Arme eine ausreichende Befestigung bzw. ein ausreichender Halt der Mitnahmemittel erreicht werden kann, so dass diese das endlose Zugmittel in sicherer und zuverlässiger Weise reibschlüssig und/oder formschlüssig mitnehmen können.

Um dies zu erreichen, können die Durchtrittsöffnungen je nach Konstruktion und Anwendung beispielsweise einen Anteil von zwischen 30% und 85%, insbesondere zwischen 50% und 70%, vorzugsweise 65%, der von dem Antriebsrad überdeckten Fläche ausmachen. Bei einem solchen Flächenanteil kann die Stabilität des Antriebsrades bzw. ein ausreichender Halt für die Mitnahmemittel auch unter Belastung gewährleistet werden, so dass vorteilhafterweise eine dauerhafte Mitnahme des endlosen Zugmittels sichergestellt werden kann, und gleichzeitig der dem geförderten Saatgut entgegengesetzte Widerstand minimiert werden.

Vorzugsweise kann das Antriebsrad dazu als Mitnahmemittel Bolzen mit einem abgerundeten und/oder angefasten und/oder rechteckigen Querschnitt aufweisen, die durch die Arme auf ihrem Umfang gehalten bzw. positioniert sind. Die Bolzen können axial nach außen hin verjüngt ausgebildet sein. Zwischen den Bolzen sind umfangsseitig Zwischenräume ausgebildet. Dadurch können gemäß einer Ausführungsform Nocken eines als Nockenriemen ausgeführten endlosen Zugmittels jeweils in die Zwischenräume derart formschlüssig eingreifen, dass die Nocken durch das angetriebene Antriebsrad mitgenommen werden und der Nockenriemen des Kornelevators dadurch angetrieben wird. Gemäß einer alternativen Ausführungsform eines endlosen Zugmittels als Flachriemen kann dieser mit den Bolzen des Antriebsrades auch lediglich über eine reibschlüssige Verbindung in Eingriff stehen, so dass der Flachriemen bei ausreichender Spannung durch das Antriebsrad ebenfalls mitgenommen und angetrieben wird.

Auf dem jeweiligen endlosen Zugmittel sind dabei Paddels angeordnet, die in einem Gehäuse des Kornelevators dafür sorgen, dass sich das dem Kornelevator zugeführte Saatgut senkrecht nach oben z.B. in Richtung eines Korntanks bewegt. Vorzugsweise ist das endlose Zugmittel bzw. sind der Nockenriemen oder der Flachriemen dabei aus durch Gewebelagen verstärktem vernetzten Polymer hergestellt. Aufgrund der Verwendung eines derartigen Nockenriemens oder Flachriemens können die Geräusche des Kornelevators gegenüber einem Kettenantrieb maßgeblich minimiert werden. Ferner erhöht ein derartiges System die Zuverlässigkeit und die Lebensdauer aufgrund der verschleißarmen Materialpaarungen, d.h. Antriebsrad und Zugmittel bzw. Nockenriemen oder Flachriemen. Das Antriebsrad kann dazu beispielsweise einstückig aus spritzgegossenem Kunststoff hergestellt sein.

Um die Ausbeute des geförderten Saatgutes zu erhöhen und den Wartungsaufwand weiter zu minimieren, ist vorzugsweise vorgesehen, dass die Zwischenräume zwischen den Mitnahmemitteln bzw. den Bolzen mit den Durchtrittsöffnungen verbunden sind. Dadurch kann erreicht werden, dass sich weniger Saatgut zwischen dem Zugmittel, insbesondere dem Flachriemen bzw. einem Nocken des Nockenriemens, und dem Antriebsrad verklemmt und dadurch unbrauchbar wird und zudem das Antriebsrad verschmutzt. Vielmehr gelangt in dem Zwischenraum befindliches Saatgut automatisch auch in die Durchtrittsöffnungen und kann sich damit nicht zwischen den Flachriemen oder den Nocken des Nockenriemens und das Antriebsrad legen.

Um dies weiter zu unterstützen, sind die Bolzen vorzugsweise mit einem abgerundeten Querschnitt, z.B. mit einer runden oder einer ovalen Querschnittsfläche ausgeführt. Dadurch kann vorteilhafterweise bewirkt werden, dass auf den Bolzen befindliches Saatgut automatisch seitlich in die Zwischenräume gelangt und durch die Durchtrittsöffnungen abtransportiert wird. Somit kann ein Einklemmen von Saatgut zwischen dem Antriebsrad und dem Zugmittel, insbesondere dem Flachriemen bzw. dem Nockenriemen, vermieden werden.

Gemäß einer Ausführungsform ist vorgesehen, dass die Arme flächig ausgeführt sind, so dass Seitenflächen der Arme parallel oder leicht angewinkelt zur Förderrichtung des Saatgutes ausgerichtet sind, und von einer Nabe des Antriebsrades ausgehend in radialer Richtung nach außen verlaufen und an dessen äußeren Enden mit einem der Mitnahmemittel verbunden sind.

Durch die flächige im Wesentlichen parallel zur Förderrichtung ausgerichtete Ausführung, kann ein Stau von Saatgut vermieden werden, da das Saatgut von der Förderschnecke kommend an den Seitenflächen der Arme ungehindert entlang "fließen" kann. Somit verbleiben allenfalls die Stirnflächen der Arme, die jedoch im Vergleich dazu vorzugsweise schmal ausgeführt werden können und daher nur einen sehr minimalen Widerstand für das Saatgut ausbilden.

Um das Durchströmen des Saatgutes durch die Durchtrittsöffnungen zu begünstigen, können die Arme bzw. die Seitenflächen der Arme um einen Winkel von zwischen 5° und 75°, vorzugsweise 65°, gegenüber einer durch die Nabe des Antriebsrades verlaufenden Längsachse, die in etwa der Strömungsrichtung bzw. Förderrichtung des Saatgutes im Bereich des Antriebsrades angibt, verdreht sein, so dass die Seitenflächen der Arme nicht mehr parallel zur Längsachse verlaufen. Dadurch kann bei angetriebenen Antriebsrad ein pumpenartiger Effekt erzielt werden, so dass das Saatgut zusätzlich durch das Antriebsrad in die Förderrichtung gedrückt bzw. "gepumpt" wird, vergleichbar zu einem axial fördernden Flügelrad oder einem Schneckenrad. Dieser Effekt kann durch eine zusätzliche Verwindung der Arme weiter verbessert werden. Der Winkel der Seitenflächen kann dazu beispielsweise dem Winkel einer Schrägverzahnung der schraubenförmigen Förderschnecke entsprechen, so dass die Schrägverzahnung der Förderschnecke - mit einer Unterbrechung - im Antriebsrad quasi fortgeführt wird. Die Fördergeschwindigkeit des Saatgutes durch die Förderschnecke kann dadurch in etwa auch im Antriebsrad beibehalten werden.

Gemäß einer alternativen Ausführungsform des Antriebsrades können auch die Arme des Antriebsrades mit einem abgerundeten und/oder angefasten Querschnitt, z.B. einem runden oder einem ovalen Querschnitt, oder einem rechteckigen Querschnitt mit ggf. abgerundeten bzw. angefasten Kanten ausgeführt sein und von einer Nabe des Antriebsrades ausgehend in radialer Richtung nach außen verlaufen, wobei die Arme an dessen äußeren Enden mit einem der Mitnahmemittel vorzugsweise einstückig verbunden sind. Dadurch kann in einfacher Weise z.B. eine T-förmige oder eine L-förmige Einheit aus Arm und damit verbundenem Mitnahmemittel ausbildet werden, wobei das Mitnahmemittel ergänzend axial nach außen hin verjüngt ausgebildet sein kann. Durch den abgerundeten und/oder angefasten Querschnitt sowohl des Armes als auch des Mitnahmemittels entsteht nur ein geringer Widerstand für das Saatgut, das sich dazwischen durch die Durchtrittsöffnungen bzw. Zwischenräume bewegt. Auch bei dieser Ausführungsform des Antriebsrades kann mit diesem ein Nockenriemen oder ein Flachriemen als endloses Zugmittel angetrieben werden.

Gemäß einer weiteren alternativen Ausführungsform des Antriebsrades kann vorgesehen sein, dass flächig ausgeführte Arme des Antriebsrades direkt an deren Enden in die Mitnahmemittel übergehen. Ein Mitnahmemittel kann dann beispielsweise durch ein umgeformtes, z.B. abgekröpftes bzw. umgebogenes Ende eines Armes ausgebildet werden. Die umgeformten Enden vergrößern dabei die Angriffsfläche für das reibschlüssig und/oder formschlüssig aufgespannte endlose Zugmittel auf dem Antriebsrand. Zwischen den an den Enden umgeformten Armen sind die erfindungsgemäßen Durchtrittsöffnungen sowie auch die Zwischenräume vorgesehen, so dass auch damit ein Durchströmen von durch die Förderschnecke in den Kornelevator gefördertem Saatgut durch das Antriebsrad hindurch ermöglicht und/oder begünstigt wird.

Ergänzend zu den Armen können im Bereich der Durchtrittsöffnungen gegenüber einer durch die Nabe des Antriebsrades verlaufenden Längsachse angewinkelte und/oder verwundene Führungsrippen angeordnet sein, die ein Fördern des Saatgutes durch die Durchtrittsöffnungen des Antriebsrades durch einen pumpenartigen Effekt begünstigen, wie es für die angewinkelten und/oder verwundenen flächigen Arme bereits beschrieben wurde. Auch die Ausbildung der Führungsrippen kann sich an der Ausbildung der Schrägverzahnung der Förderschnecke orientieren.

Vorzugsweise ist weiterhin vorgesehen, dass eine Naben-Außenseite der Nabe des Antriebsrades zumindest bereichsweise zur Förderschnecke hin und/oder von der Förderschnecke weg bzw. in axialer Richtung nach einer oder nach beiden Seiten hin abfallend ausgebildet ist zum Verhindern einer Blockade und/oder einem Verkeilen von Saatgut im Bereich der Nabe des Antriebsrades. Demnach kann die Naben-Außenseite in einem ersten Bereich der Nabe, der der Förderschnecke am nächsten ist, zumindest teilweise zur Förderschnecke hin abfallend und/oder in einem sich an den ersten Bereich der Nabe in Richtung von der Förderschnecke weg anschließenden zweiten Bereich der Nabe zumindest teilweise zur Förderschnecke hin ansteigend ausgeführt, wobei beide Bereiche möglichst monoton ineinander übergehen.

Dadurch kann das Fließverhalten des Saatgutes weiter verbessert werden, da sich das Saatgut an der zur Förderschnecke hin ausgerichteten Seite des Antriebsrades nicht staut und gleichzeitig in Förderrichtung aus den Durchtrittsöffnungen des Antriebsrades abfließen kann, ohne sich zu verkeilen.

Vorzugsweise kann weiterhin vorgesehen sein, dass das Antriebsrad mindestens eine Ringscheibe im Bereich des äußeren Umfangs aufweist, die endseitig mit den Mitnahmemitteln verbunden ist, wobei die Ringscheibe in radialer Richtung nach außen über die Mitnahmemittel derartig übersteht, dass ein auf das Antriebsrad aufgespanntes endloses Zugmittel in axialer Richtung geführt ist. Somit kann ein seitliches Wegrutschen des Zugmittels vermieden werden, wodurch ein zuverlässiger Betrieb des Kornelevators gewährleistet werden kann.

Ergänzend können durch die Ringscheiben auch einzelne Mitnahmemittel gehalten werden, die nicht unmittelbar über einen der Arme mit der Nabe verbunden sind, wobei sich diese Mitnahmemittel auf demselben Umfang wie die von den Armen gehaltenen Mitnahmemitteln befinden. Dadurch kann eine zuverlässige reibschlüssige und/oder formschlüssige Kraftübertragung bzw. Drehmomentübertragung auf das Zugmittel durch eine ausreichende Anzahl an Mitnahmemitteln gewährleistet werden. Die weiteren Mitnahmemittel sind hierbei zumindest mittelbar über die Ringscheibe und die von den Armen gehaltenen Mitnahmemitteln mit der Nabe verbunden. Gleichzeitig kann die Anzahl der Arme vermindert werden, da beispielsweise lediglich jedes zweite oder dritte oder vierte, usw. Mitnahmemittel unmittelbar über einen Arm mit der Nabe verbunden ist. Demnach können beispielsweise insgesamt lediglich zwei oder drei Arme vorgesehen sein, um die Mitnahmemittel zu halten. Dadurch kann die Fläche der Durchtrittsöffnung vergrößert werden, was das Durchströmen von Saatgut begünstigt.

Vorzugsweise kann weiterhin vorgesehen sein, auf den Mitnahmemitteln in etwa mittig und radial nach außen abstehend Führungsnocken anzuordnen, wobei die Führungsnocken in Öffnungen am endlosen Zugmittel eingreifen können. Dadurch kann ein synchroner Lauf des Antriebsrades und des endlosen Zugmittels insbesondere bei einer rein reibschlüssigen aber auch bei einer formschlüssigen Verbindung zwischen dem Antriebsrad und dem endlosen Zugmittel sichergestellt werden und zudem - ergänzend oder alternativ zu den Ringscheiben - ein axiales Verrutschen des endlosen Zugmittels auf dem Antriebsrad vermieden werden.

Erfindungsgemäß wird weiterhin eine Kornelevator-Anordnung mit einem Kornelevator und einer den Kornelevator antreibenden vorbeschriebenen Antriebseinheit vorgeschlagen, wobei das Antriebsrad der Antriebseinheit mit dem endlosen Zugmittel des Kornelevators derartig formschlüssig und/oder reibschlüssig in Eingriff steht, dass durch ein Verdrehen der Förderschnecke sowie des damit in Wirkverbindung stehenden Antriebsrades auch das endlose Zugmittel angetrieben wird, wobei dadurch von der Förderschnecke in den Kornelevator gefördertes Saatgut durch die Paddels auf dem endlosen Zugmittel durch den Kornelevator gefördert werden kann, wobei aufgrund der mehrere Durchtrittsöffnungen ein Durchströmen von durch die Förderschnecke in den Kornelevator gefördertem Saatgut durch das Antriebsrad hindurch ermöglicht und/oder begünstigt wird.

Das endlose Zugmittel ist hierbei gemäß einer Alternative als ein Nockenriemen mit Nocken und dazwischenliegenden Lücken ausgeführt, wobei die Nocken in die Zwischenräume zwischen den Mitnahmemitteln formschlüssig eingreifen können, um die Nocken des Nockenriemens durch das angetriebene Antriebsrad mitzunehmen und den Nockenriemen des Kornelevators dadurch anzutreiben.

Gemäß einer alternativen Ausführungsform ist das endlose Zugmittel als Flachriemen ausgeführt, der von den Mitnahmemitteln des Antriebsrades über Friktion mitgenommen wird, d.h. ein reibschlüssiger Eingriff zwischen beiden vorliegt. Ergänzend kann über optionale Führungsnocken auf den Mitnahmemitteln ein synchroner Lauf des Antriebsrades und des Zugmittels insbesondere bei dieser rein reibschlüssigen Verbindung zwischen dem Antriebsrad und dem endlosen Zugmittel sichergestellt werden.

Die Erfindung wird im Folgenden anhand von Ausführungsbeispielen näher erläutert. Es zeigen:
- Fig. 1: perspektivische Ansichten einer Antriebseinheit für einen Kornelevator;
- Fig. 2: eine Detailansicht eines Antriebsrades an einer Förderschnecke;
- Fig. 3: eine Detailansicht des Antriebsrades gemäß Fig. 2;
- Fig. 4, 5, 6a, 6b: alternative Ausführungsformen des Antriebsrades der erfindungsgemäßen Antriebseinheit.

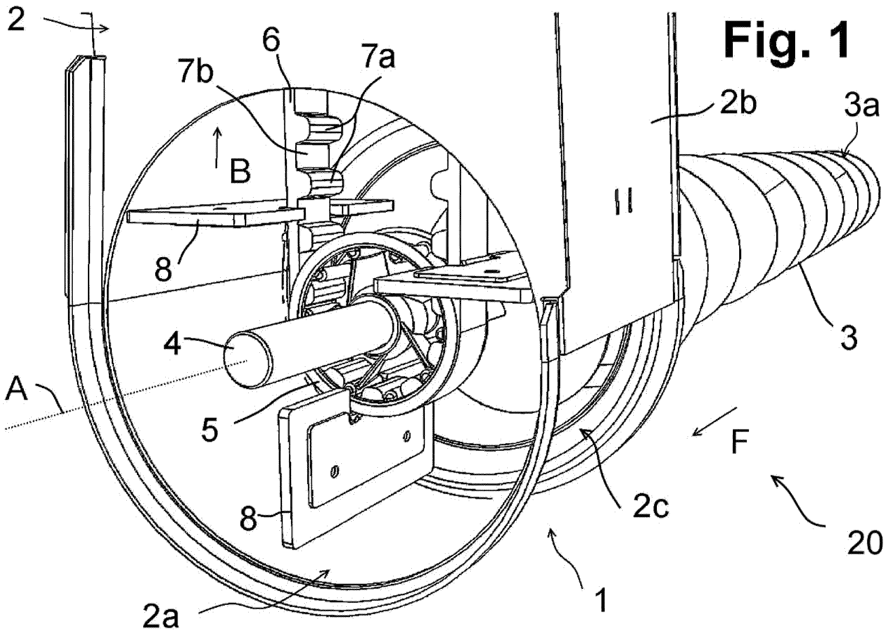

Gemäß Figur 1 ist eine Antriebseinheit 1 für einen Kornelevator 2 dargestellt, wobei der Kornelevator 2 dazu dient, ein über eine Förderschnecke 3 mit Schrägverzahnung 3a gefördertes Saatgut, z. B. Maiskörner oder Getreidekörner, in Richtung eines nicht dargestellten Korntanks zu transportieren. Dazu wird die Förderschnecke 3 von einem nicht dargestellten Antrieb mit einer vorgegebenen Geschwindigkeit über eine Welle 4 um eine Längsachse A verdreht, so dass das Saatgut über die schraubenförmig verdrehte Verzahnung 3a der Förderschnecke 3 in Richtung des Kornelevators 2 (Förderrichtung F) gefördert wird. Der Kornelevator 2 und die Antriebseinheit 1 bilden hierbei zusammen eine erfindungsgemäße Kornelevator-Anordnung 20 aus.

Damit in den Kornelevator 2 in einem unteren Bereich 2a eintretendes Saatgut in diesem gehalten und nach oben in Richtung des Korntanks (s. Pfeil B) gefördert werden kann, ist der Kornelevator 2 von einem Gehäuse 2b umgeben. Das Gehäuse 2b umschließt den Kornelevator 2 und weist dabei insbesondere eine Förderöffnung 2c auf, so dass Saatgut von der Förderschnecke 3 entlang der Förderrichtung F in den unteren Bereich 2a gelangen kann. Zur Reinigung und/oder Wartung kann das Gehäuse 2b auch an den entsprechenden Stellen durch eine nicht dargestellte Klappe geöffnet werden.

Auf der Welle 4 der Förderschnecke 3 ist ein Antriebsrad 5 verdrehfest befestigt, so dass eine Drehung der Förderschnecke 3 gleichzeitig auch eine Verdrehung des Antriebsrades 5 bewirkt. Die Welle 4 der Förderschnecke 3 ragt dazu in den unteren Bereich 2a des Kornelevators 2 derartig ein, dass gemäß dieser Ausführungsform ein endloser Nockenriemen 6a (endloses Zugmittel) des Kornelevators 2 auf das Antriebsrad 5 gespannt werden kann. Der Nockenriemen 6a weist in vorgegebenen Abständen Nocken 7a auf, die durch Lücken 7b voneinander getrennt sind und die mit dem Antriebsrad 5 derartig formschlüssig in Eingriff stehen, dass bei gespanntem Nockenriemen 6a eine Drehbewegung des angetriebenen Antriebsrades 5 auf den Nockenriemen 6a übertragen wird. Dadurch kann ein Drehmoment von der angetriebenen Förderschnecke 3 über das Antriebsrad 5 auch auf den Nockenriemen 6a übertragen werden, um den Kornelevator 2 ebenfalls anzutreiben. Der Nockenriemen 6a sind in aller Regel aus durch Gewebelagen verstärktem vernetzten Polymer hergestellt.

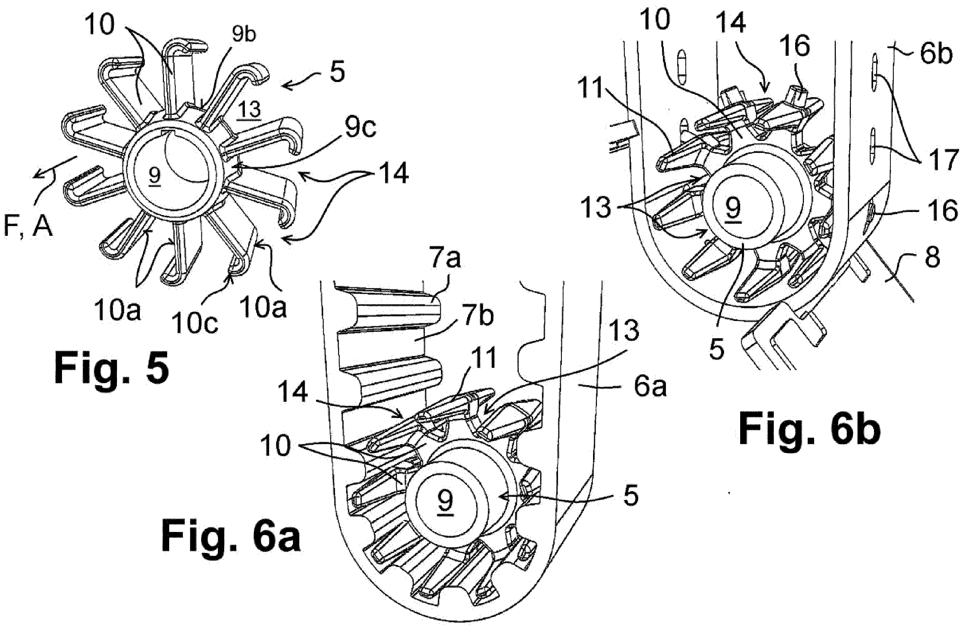

Alternativ zu dem Nockenriemen 6a kann als endloses Zugmittel auch ein für dieses Ausführungsbeispiel nicht dargestellter Flachriemen 6b auf das Antriebsrad 5 gemäß Fig. 1 gespannt werden, um den Kornelevator 2 zu betreiben. Die Übertragung des Drehmomentes von der Förderschnecke 3 auf den Flachriemen 6b erfolgt dann insbesondere durch einen reibschlüssigen "Eingriff" zwischen dem Antriebsrad 5 und dem Flachriemen 6b. Ein Ausführungsbeispiel mit einem Flachriemen 6b zeigt die Fig. 6b, deren Beschreibung weiter unten folgt.

Um ein Fördern von Saatgut durch den Kornelevator 2 zu bewirken, sind auf dem Nockenriemen 6a in vorgegebenen Abständen sogenannte Paddels 8, d.h. Mitnehmerarme, befestigt, die gemäß Fig. 1 plattenförmig ausgeführt sind und in etwa senkrecht vom Nockenriemen 6a nach außen hin abstehen. Diese füllen den Raum im Gehäuse 2b des Kornelevators 2 zumindest teilweise derartig aus, dass in den unteren Bereich 2a des Kornelevators 2 von der Förderschnecke 3 kommendes Saatgut über die Paddels 8 nach oben (Pfeil B) in Richtung des Korntanks transportiert werden kann, wenn der Nockenriemen 6a vom Antriebsrad 5 angetrieben wird. Vergleichbar ist die Anordnung und Funktion der Paddels 8 bei einem als Flachriemen 6b ausgeführten endlosen Zugmittel (s. Fig. 6b).

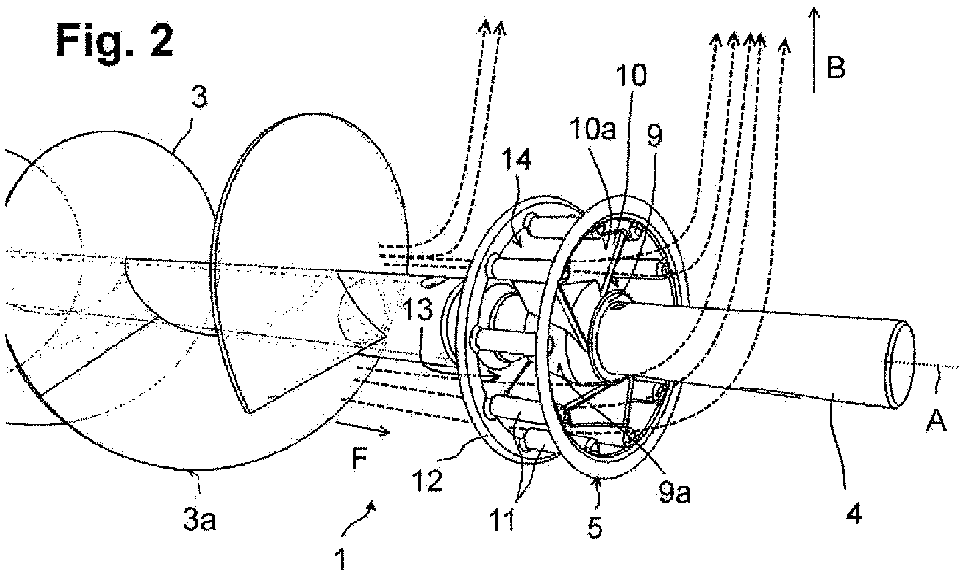

Gemäß Fig. 2 ist die Antriebseinheit 1 mit dem Antriebsrad 5 und der Förderschnecke 3 in einer Detailansicht dargestellt. Das Antriebsrad 5 ist über seine Nabe 9 auf der Welle 4 verdrehfest befestigt, so dass sich das Antriebsrad 5 mit der Förderschnecke 3 gemeinsam um die Längsachse A verdrehen. Auf seinem Umfang weist das Antriebsrad 5 mehrere Bolzen 11 als Mitnahmemittel auf, wobei die Bolzen 11 einen Abstand voneinander aufweisen, der der Teilung des Nockenriemens 6a entspricht, so dass die Bolzen 11 in die zwischen den Nocken 7a gebildeten Lücken 7b formschlüssig eingreifen können und damit ein schlupffreier Antrieb des Nockenriemens 6a ermöglicht wird.

Von einer Naben-Außenseite 9a der Nabe 9 ragen mehrere flächige Arme 10 in radialer Richtung ab, wobei an äußeren Enden 10a der Arme 10 ein Teil der Bolzen 11 befestigt sind. Weiterhin sind Bolzen 11 auf demselben Umfang des Antriebsrades 5 angeordnet, die allerdings nicht unmittelbar über einen der Arme 10 in ihrer Position gehalten werden. Vielmehr werden die weiteren Bolzen 11 über zwei endseitig angeordnete Ringscheiben 12 gehalten, die mit den von den Armen 10 gehaltenen Bolzen 11 fest verbunden sind, so dass die weiteren Bolzen 11 zumindest mittelbar über die Ringscheibe 12 auch mit den Armen 10 und der Nabe 9 verbunden sind. Gemäß diesem Ausführungsbeispiel wird lediglich jeder zweite Bolzen 11 unmittelbar über einen Arm 10 mit der Nabe 9 verbunden. Es sind aber auch Ausführungen denkbar, bei denen je nach Anzahl an Bolzen 11, Material und Belastung nur jeder dritte oder jeder vierte Bolzen 11 über einen Arm 10 mit der Nabe 9 verbunden ist. Damit kann die Anzahl der Arme 10 beispielsweise auf drei oder lediglich zwei reduziert werden.

Dies hat den Vorteil, dass das Antriebsrad 5 insgesamt offener gestaltet ist, da zwischen den Armen 10 größere Durchtrittsöffnungen 13 für gefördertes Saatgut ausgebildet werden können (s. gestrichelte Linie in Fig. 2). Das Saatgut wird dadurch bei einem Fördervorgang weniger stark durch das Antriebsrad 5 behindert und kann weitestgehend ungestört in bzw. durch den Kornelevator 2 "fließen". Die abgedeckte Fläche (Querschnittsfläche) der Durchtrittsöffnungen 13 entspricht dabei in etwa zwischen 40 und 85 % der von dem Antriebsrad 5 insgesamt abgedeckten Fläche (Querschnittsfläche). Dadurch kann gleichzeitig bei großen Belastungen eine Kraftübertragung auf den Nockenriemen 6a über eine ausreichende Anzahl an Bolzen 11 gewährleistet werden und somit ein "Durchrutschen" der Nocken 7a bei hohen Belastungen vermieden werden.

Die Ringscheiben 12 haben neben dem Positionieren und Halten eines Teils der Bolzen 11 die Aufgabe, ein axiales Verrutschen des Nockenriemens 6a auf dem Antriebsrad 5 zu verhindern, d.h. die Ringscheiben 12 wirken als seitlicher Anschlag für den Nockenriemen 6a bzw. als Riemenführung auf dem Antriebsrad 5.

Durch die Bolzen 11 des Antriebsrades 5 wird also eine Art Zahnrad ausgebildet, da die Nocken 7a des auf das Antriebsrad 5 aufgespannten Nockenriemens 6a in Zwischenräume 14 zwischen den Bolzen 11 und die Bolzen 11 selbst in die Lücken 7b zwischen den Nocken 7a formschlüssig eingreifen können und die Nocken 7a bei angetriebenem Antriebsrad 5 durch die Bolzen 11 mitgenommen werden. Dadurch wird der Nockenriemen 6a bzw. der Kornelevator 2 angetrieben, um Saatgut in den Korntank zu fördern. Bei Verwendung eines Flachriemens 6b als endloses Zugmittel wird dieser insbesondere durch eine reibschlüssige Verbindung zwischen den Bolzen 11 und dem Flachriemen 6b angetrieben, so dass auch darüber ein Betrieb des Kornelevators 2 erreicht werden kann (vgl. Fig. 6b).

Durch die Zwischenräume 14 zwischen den Bolzen 11 kann weiterhin erreicht werden, dass der Bereich bzw. die Fläche, in der sich Saatgut zwischen dem Antriebsrad 5 und dem Nockenriemen 6a verklemmen kann, verringert wird. Die abgerundete, insbesondere runde oder ggf. auch ovale Querschnittsfläche der Bolzen 11 unterstützt dies, da das Saatgut bei einer Drehbewegung des Antriebsrades 5 nicht auf den Bolzen 11 liegenbleibt und daher nicht oder nur in sehr geringem Maße zwischen dem Nockenriemen 6a bzw. den Lücken 7b und dem Bolzen 11 zerdrückt wird und somit nur wenig Kornbeschädigung entsteht. Vergleichbares gilt bei der Verwendung eines Flachriemens 6b.

Um den Fördervorgang von Saatgut durch die Durchtrittsöffnungen 13 des Antriebsrades 5 zu unterstützen, sind Seitenflächen 10b der Arme 10 gemäß der Ausführungsform in den Figuren 1 bis 3 gegenüber der Längsachse A bzw. der Förderrichtung F angewinkelt, beispielsweise um einen Winkel α von zwischen 5° und 75°, vorzugsweise ca. 65°. Der Winkel α entspricht dabei in etwa dem Winkel der Schrägverzahnung 3a der schraubenförmigen Förderschnecke 3, so dass die Schrägverzahnung 3a der Förderschnecke 3 - mit einer Unterbrechung - im Antriebsrad 5 quasi fortgeführt wird, so dass das Fließverhalten des Saatgutes in beiden Elementen 3, 5 vergleichbar ist. Zusätzlich kann auch eine Verwindung in die Arme 10 eingebracht werden. Dadurch wird das geförderte Saatgut, das bei Eintritt in den Kornelevator 2 im Wesentlichen in eine Förderrichtung F parallel zur Längsachse A gefördert wird, bei einer Verdrehung des Antriebsrades 5 zusätzlich aus den Durchtrittsöffnungen 13 auf die gegenüberliegende Seite des Antriebsrades 5 gedrückt bzw. geleitet, vergleichbar zu einer Pumpe bzw. einem axial fördernden Flügelrad oder Schneckenrad, und der Fördervorgang weiter optimiert.

Dies wird weiterhin dadurch unterstützt, dass die Naben-Außenseite 9a derartig nach beiden Seiten hin abgeschrägt ist, dass von der Förderschnecke 3 kommendes Saatgut nicht an einer stark ansteigenden Stufe bzw. Flanke im Bereich der Welle 4 bzw. der Nabe 9 gestaut wird und gleichzeitig ein Verkeilen von Saatgut in den Durchtrittsöffnungen 13 erfolgt. Die abgeschrägte Naben-Außenseite 9a sorgt somit dafür, dass das Saatgut ungehindert auch in und durch das Antriebsrad 5 gefördert werden kann.

Demnach ist die Naben-Außenseite 9a in einem ersten Bereich 9b der Nabe 9, der der Förderschnecke 3 am nächsten ist, zur Förderschnecke 3 hin abfallend ausgeführt, um eine Stufe zu vermeiden. Dieser erste Bereich 9b geht in Richtung von der Förderschnecke 3 weg in einen sich direkt anschließenden zweiten Bereich 9c über, wobei der zweite Bereich 9c zur Förderschnecke 3 hin ansteigt bzw. in die entgegengesetzte Richtung abfällt. Dadurch wird erreicht, dass sich das Saatgut in den Durchtrittsöffnungen 13 nicht verkeilt.

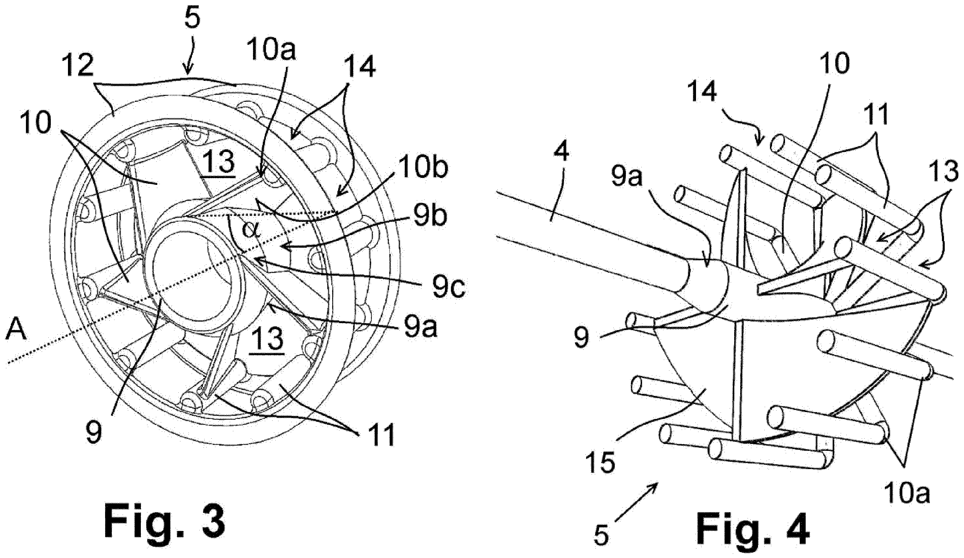

Gemäß einer weiteren Ausführungsform des Antriebsrades 5, die in Fig. 4 dargestellt ist, sind keine Ringscheiben 12 vorhanden und jedem Bolzen 11 ist jeweils ein Arm 10 zugeordnet. Das Antriebsrad 5 ist in dieser Ausführungsform ebenfalls auf der Welle 4 verdrehfest befestigt. Von der Nabe 9 des Antriebsrades 5 ausgehend, ist für jeden Bolzen 11 jeweils ein radial abstehender Arm 10 vorgesehen, der mit dem parallel zur Längsachse A verlaufenden Bolzen 11 als Mitnahmemittel verbunden ist bzw. in diesen übergeht, so dass jeweils eine L-förmige Einheit aus dem Arm 10 und dem Bolzen 11 ausgebildet wird. Der Arm 10 kann dazu beispielsweise einstückig mit dem Bolzen 11 gefertigt sein, wobei sowohl der Arm 10 als auch der Bolzen 11 einen abgerundeten, insbesondere runden oder ggf. auch ovalen Querschnitt aufweisen, um das Saatgut weitestgehend störungsfrei fördern zu können. Zwischen den Bolzen 11 wird auch hier ein Zwischenraum 14 ausgebildet, der mit den Durchtrittsöffnungen 13 verbunden ist und in den der Nocken 7a des Nockenriemens 6a formschlüssig eingreifen kann. Auch das Aufspannen eines Flachriemens 6b ist möglich, um diesen über eine reibschlüssige Verbindung anzutreiben.

Weiterhin sind gemäß dem Ausführungsbeispiel in Fig. 4 ergänzend zu den Armen 10 Führungsrippen 15 vorgesehen, die von der Nabe 9 ausgehend radial nach außen verlaufen und dieselbe Funktion haben wie die angewinkelten Arme 10 in dem Ausführungsbeispiel gemäß der Figuren 1 bis 3. Die Führungsrippen 15 sind dazu angewinkelt und/oder verwunden und sorgen dafür, dass das von der Förderschnecke 3 kommende Saatgut pumpenartig möglichst störungsfrei durch das Antriebsrad 5 geleitet bzw. gefördert wird. Zusätzlich zu der Verbindung zur Nabe 9 sind die Führungsrippen 15 stellenweise auch mit den Armen 10 und/oder den Bolzen 11 verbunden, so dass die Stabilität des Antriebsrades 5 insgesamt erhöht wird. Die Form der Führungsrippen 15 kann hierbei an die Form der Schrägverzahnung 3a der Förderschnecke 3 angepasst sein, so dass das Fördern von Saatgut im Antriebsrad 5 in etwa vergleichbar wie in der Förderschnecke 3 erfolgt und das Fließverhalten in beiden Einheiten somit aneinander angepasst ist.

Die offene Gestaltung des Antriebsrades 5 wird gemäß Fig. 4 also weitergeführt, wobei die Ringscheiben 12 entfallen und somit weniger Staufläche für das geförderte Saatgut vorhanden ist. Auch gemäß diesem Ausführungsbeispiel ist vorgesehen, dass die Naben-Außenseite 9a abgeschrägt ist, so dass das Saatgut weitestgehend ungehindert in das Antriebsrad 5 und durch die spiralförmigen Führungsrippen 15 gelangen kann. Zur Führung des aufgespannten Nockenriemens 6a kann gemäß dieser Ausführungsform aber grundsätzlich auch eine Ringscheibe 12 vorgesehen sein.

Gemäß einer weiteren Ausführungsform des Antriebsrades 5, die in der Fig. 5 gezeigt ist, weist das Antriebsrad 5 flächige Arme 10 auf, deren äußere Enden 10b jeweils als umgeformte Enden 10c ausgebildet sind und dabei gemäß dieser Ausführungsform halboffen bzw. u-förmig umgebogen sind.
Die umgeformten Enden 10c vergrößern die Angriffsfläche der äußeren Enden 10b und dienen als Mitnahmemittel, um das darauf aufspannbare endlose Zugmittel 6a, 6b reibschlüssig und/oder formschlüssig mitzunehmen. Zwischen den an den Enden umgeformten Armen 10 sind die erfindungsgemäßen Durchtrittsöffnungen 13 sowie gleichzeitig auch die Zwischenräume 14 ausgebildet, so dass auch damit ein Durchströmen von durch die Förderschnecke 3 in den Kornelevator 2 gefördertem Saatgut durch das Antriebsrad 5 hindurch ermöglicht und/oder begünstigt wird.

Die gemäß dieser Ausführungsform parallel zur Förderrichtung F ausgerichteten Seitenflächen 10a sorgen dabei dafür, dass das Saatgut ungehindert durch das Antriebsrad 5 strömen kann. Die Seitenflächen 10a der Arme 10 in dieser Ausführung können grundsätzlich zumindest bereichsweise ebenfalls gegenüber der Förderrichtung F angewinkelt und/oder verwunden sein, vergleichbar zum Ausführungsbeispiel gemäß Fig. 3.

Gemäß einer weiteren Ausführungsform des Antriebsrades 5, die in der Fig. 6a gezeigt ist, ist vorgesehen, dass die Arme 10 einen rechteckigen Querschnitt mit abgerundeten Kanten aufweisen und diese jeweils in einen Bolzen 11 als Mitnahmemittel mit ebenfalls abgerundetem Querschnitt übergehen. Der jeweilige Bolzen 11 steht in axialer Richtung zu beiden Seiten vom jeweiligen Arm 10 ab und verjüngt sich dabei geringfügig axial nach außen hin. Eine Einheit aus dem Arm 10 und dem Bolzen 11 ist demnach T-förmig ausgebildet. Zwischen den Bolzen 11 benachbarter Arme 10 ist ein Zwischenraum 14 ausgebildet und zwischen benachbarten Armen 10 die erfindungsgemäßen Durchtrittsöffnungen 13. Gemäß der in Fig. 6a dargestellten Variante ist auf dem derart ausgeführten Antriebsrad 5 ein Nockenriemen 6b mit Nocken 7a und dazwischenliegenden Lücken 7b aufgespannt, um einen formschlüssigen und reibschlüssigen Eingriff zwischen beiden zu erhalten.

Fig. 6b zeigt in etwa dieselbe Ausführung des Antriebsrades 5 wie in Fig. 6a mit dem Unterschied, dass das Antriebsrad 5 einen Flachriemen 6b insbesondere reibschlüssig aufnimmt, d.h. ein Antrieb des Flachriemens 6b erfolgt hauptsächlich durch Friktion. Um ein Antreiben des Flachriemens 6b sicherzustellen, sind auf den Bolzen 11 jeweils radial abstehende Antriebsnocken 16 vorgesehen, die im Flachriemen 6b in mittige Öffnungen 17 eingreifen. Die Öffnungen 17 sind als Langlöcher ausgeführt und dienen dazu, die Kraftübertragung vom Antriebsrand 5 auf den Flachriemen 6b zu optimieren, indem ein Durchrutschen des rein reibschlüssig angetriebenen Flachriemens 6b bei hohen Belastungen durch die Antriebsnocken 16 verhindert wird. Dadurch kann ein synchroner Lauf zwischen beiden sichergestellt werden. Weiterhin können die Antriebsnocken 16 zur Führungsunterstützung genutzt werden, so dass der Flachriemen 6b nicht in axialer Richtung bezüglich des Antriebsrades 5 verrutscht.

Die Führungsnocken 16 können grundsätzlich auch bei den Ausführungen mit einem Nockenriemen 6a verwendet werden, um auch dafür einen synchronen Lauf zu unterstützen sowie auch eine axiale Führung zu ermöglichen.

### Bezugszeichenliste

- 1: Antriebseinheit
- 2: Kornelevator
- 2a: unterer Bereich des Kornelevators 2
- 2b: Gehäuse
- 3: Förderschnecke
- 3a: Schrägverzahung der Förderschnecke 3
- 4: Welle
- 5: Antriebsrad
- 6a: Nockenriemen
- 6b: Flachriemen
- 7a: Nocken
- 7b: Lücken
- 8: Paddel
- 9: Nabe
- 9a: Naben-Außenseite
- 9b: erster Bereich der Naben-Außenseite 9a
- 9c: zweiter Bereich der Naben-Außenseite 9a
- 10: Arm
- 10a: äußere Enden des Armes 10
- 10b: Seitenfläche des Armes 10
- 10c: umgeformte Enden des Armes 10
- 11: Bolzen
- 12: Ringscheibe
- 13: Durchtrittsöffnungen
- 14: Zwischenraum
- 15: Führungsrippen
- 16: Antriebsnocken
- 17: Öffnungen
- 20: Kornelevator-Anordnung
- A: Längsachse
- α: Winkel
- B: Förderrichtung durch den Kornelevator
- F: Förderrichtung vor dem Kornelevator

## Patentansprüche

1. Antriebseinheit (1) für einen Kornelevator (2), insbesondere für landwirtschaftliche Maschinen, mit einem Antriebsrad (5), das mit einer Förderschnecke (3) zum Fördern von Saatgut in den Kornelevator (2) wirkverbunden ist, wobei das Antriebsrad (5) auf einer Welle (4) der Förderschnecke (3) verdrehfest befestigt ist, so dass sich das Antriebsrad (5) mit der Förderschnecke (3) gemeinsam um eine Längsachse (A) verdrehen kann, wobei das Antriebsrad (5) Mitnahmemittel (11; 10c) aufweist, die mit einem mehrere Paddels (8) aufweisenden endlosen Zugmittel (6a; 6b) des Kornelevators (2) formschlüssig und/oder reibschlüssig in Eingriff gebracht werden können zum Antreiben des endlosen Zugmittels (6a; 6b),
**dadurch gekennzeichnet, dass**
in dem Antriebsrad (5) zwischen die Mitnahmemittel (11; 10c) haltenden Armen (10) mehrere Durchtrittsöffnungen (13) derartig ausgebildet sind, dass ein Durchströmen von durch die Förderschnecke (3) in den Kornelevator (2) entlang einer Förderrichtung (F) gefördertem Saatgut durch das Antriebsrad (5) hindurch ermöglicht und/oder begünstigt wird.

2. Antriebseinheit (1) nach Anspruch 1, **dadurch gekennzeichnet, dass** das Antriebsrad (5) als Mitnahmemittel Bolzen (11) mit einem abgerundeten und/oder angefasten und/oder rechteckigen Querschnitt aufweist, die durch die Arme (10) auf ihrem Umfang gehalten sind, und zwischen den Bolzen (11) Zwischenräume (14) ausgebildet sind, so dass
- Nocken (7a) eines als Nockenriemen (6a) ausgeführten endlosen Zugmittels in die Zwischenräume (14) formschlüssig eingreifen können, um den Nocken (7a) durch das angetriebene Antriebsrad (5) mitzunehmen und den Nockenriemen (6a) des Kornelevators (2) dadurch anzutreiben, oder
- ein als Flachriemen (6b) ausgeführtes endloses Zugmittel reibschlüssig mit den Bolzen (11) in Eingriff gelangen kann, um den Flachriemen (6b) mitzunehmen und den Flachriemen (6b) des Kornelevators (2) dadurch anzutreiben.

3. Antriebseinheit (1) nach Anspruch 1, **dadurch gekennzeichnet, dass** die Arme (10) des Antriebsrades (5) jeweils ein umgeformtes Ende (10c) aufweisen, wobei die umgeformten Enden (10c) das Mitnahmemittel ausbilden, wobei die umgeformten Enden (10c) jeweils auf demselben Umfang angeordnet sind und zwischen benachbarten umgeformten Enden (10c) ein Zwischenraum (14) ausgebildet wird, so dass
- Nocken (7a) eines als Nockenriemen (6a) ausgeführten endlosen Zugmittels in die Zwischenräume (14) formschlüssig eingreifen können, um den Nocken (7a) durch das angetriebene Antriebsrad (5) mitzunehmen und den Nockenriemen (6a) des Kornelevators (2) dadurch anzutreiben, oder
- ein als Flachriemen (6b) ausgeführtes endloses Zugmittel reibschlüssig mit den umgeformten Enden (10c) in Eingriff gelangen kann, um den Flachriemen (6b) mitzunehmen und den Flachriemen (6b) des Kornelevators (2) dadurch anzutreiben.

4. Antriebseinheit (1) nach Anspruch 2 oder 3, **dadurch gekennzeichnet, dass** die Zwischenräume (14) mit den Durchtrittsöffnungen (13) verbunden sind zum Verhindern eines Einklemmens von Saatgut zwischen dem endlosen Zugmittel (6a; 6b) und dem Antriebsrad (5).

5. Antriebseinheit (1) nach einem der vorhergehenden Ansprüche, **dadurch gekennzeichnet, dass** die Arme (10) flächig ausgeführt sind, wobei Seitenflächen (10b) der Arme (10) parallel oder angewinkelt zur Förderrichtung (F) des Saatgutes ausgerichtet sind und von einer Nabe (9) des Antriebsrades (5) ausgehend in radialer Richtung nach außen verlaufen und an dessen äußeren Enden (10a) mit zumindest einem der Mitnahmemittel (11; 10c) verbunden sind.

6. Antriebseinheit (1) nach Anspruch 5, **dadurch gekennzeichnet, dass** die Seitenflächen (10b) der Arme (10) um einen Winkel (α) von zwischen 5° und 75°, vorzugsweise 65°, insbesondere einer Schrägverzahung (3a) der schraubenförmigen Förderschnecke (3) entsprechend, gegenüber einer durch die Nabe (9) des Antriebsrades (5) verlaufenden Längsachse (A) verdreht sind zum Begünstigen einer Förderung des Saatgutes durch die Durchtrittsöffnungen (13) des Antriebsrades (5).

7. Antriebseinheit (1) nach Anspruch 5 oder 6, **dadurch gekennzeichnet, dass** die Arme (10) zusätzlich verwunden sind.

8. Antriebseinheit (1) nach einem der Ansprüche 1 bis 4, **dadurch gekennzeichnet, dass** die Arme (10) eine abgerundete und/oder angefaste und/oder rechteckige Querschnittsfläche aufweisen und von einer Nabe (9) des Antriebsrades (5) ausgehend in radialer Richtung nach außen verlaufen und an dessen äußeren Enden (10a) mit zumindest einem der Mitnahmemittel (11; 10c) verbunden sind.

9. Antriebseinheit (1) nach einem der vorhergehenden Ansprüche, **dadurch gekennzeichnet, dass** eine Einheit aus Arm (10) und damit verbundenem Mitnahmemittel (11; 10c) eine L-Form oder eine T-Form ausbildet, wobei das jeweilige Mitnahmemittel (11, 10c) dazu einseitig oder beidseitig in axialer und/oder radialer Richtung von dem Arm (10) absteht.

10. Antriebseinheit (1) nach einem der vorhergehenden Ansprüche, **dadurch gekennzeichnet, dass** sich die Mitnahmemittel (11) in axialer Richtung nach außen hin verjüngen.

11. Antriebseinheit (1) nach einem der vorhergehenden Ansprüche, **dadurch gekennzeichnet, dass** im Bereich der Durchtrittsöffnungen (13) gegenüber einer durch die Nabe (9) des Antriebsrades (5) verlaufenden Längsachse (A) angewinkelte und/oder verwundene Führungsrippen (15) angeordnet sind zum Begünstigen einer Förderung des Saatgutes durch die Durchtrittsöffnungen (13) des Antriebsrades (5).

12. Antriebseinheit (1) nach einem der vorhergehenden Ansprüche, **dadurch gekennzeichnet, dass** die Durchtrittsöffnungen (13) einen Anteil von zwischen 30% und 85%, vorzugsweise 65%, der von dem Antriebsrad (5) überdeckten Fläche ausmachen.

13. Antriebseinheit (1) nach einem der vorhergehenden Ansprüche, **dadurch gekennzeichnet, dass** eine Naben-Außenseite (9a) der Nabe (9) des Antriebsrades (5) zumindest bereichsweise in axialer Richtung abgeschrägt ausgebildet ist, wobei die Naben-Außenseite (9a) in einem zur Förderschnecke (3) zeigenden ersten Bereich (9b) der Nabe (9) zumindest teilweise axial nach außen zur Förderschnecke (3) hin abfallend ausgeführt ist zum Verhindern einer Blockade von Saatgut vor dem Antriebsrad (5).

14. Antriebseinheit (1) nach einem der vorhergehenden Ansprüche, **dadurch gekennzeichnet, dass** eine Naben-Außenseite (9a) der Nabe (9) des Antriebsrades (5) zumindest bereichsweise abgeschrägt ausgebildet ist, wobei die Naben-Außenseite (9a) in einem von der Förderschnecke (3) weg zeigenden zweiten Bereich (9c) der Nabe (9) zumindest teilweise axial nach außen von der Förderschnecke (3) weg abfallend ausgeführt ist zum Verhindern eines Verkeilens von Saatgut in dem Antriebsrad (5).

15. Antriebseinheit (1) nach einem der vorhergehenden Ansprüche, **dadurch gekennzeichnet, dass** das Antriebsrad (5) weiterhin mindestens eine Ringscheibe (12) aufweist, die endseitig mit den Mitnahmemitteln (11; 10c) verbunden ist, wobei die Ringscheibe (12) in radialer Richtung nach außen über die Mitnahmemittel (11; 10c) derartig übersteht, dass ein auf das Antriebsrad (5) aufgespanntes endloses Zugmittel (6a; 6b) in axialer Richtung geführt ist.

16. Antriebseinheit (1) nach Anspruch 15, **dadurch gekennzeichnet, dass** an der Ringscheibe (12) Mitnahmemittel (11) angeordnet sind, die nicht unmittelbar von einem der Arme (10) gehalten sind, wobei sich diese Mitnahmemittel (11) auf demselben Umfang wie die von den Armen (10) unmittelbar gehaltenen Mitnahmemitteln (11) befinden.

17. Antriebseinheit (1) nach einem der vorhergehenden Ansprüche, **dadurch gekennzeichnet, dass** auf den Mitnahmemitteln (11; 10c) radial nach außen abstehende Führungsnocken (16) angeordnet sind, wobei die Führungsnocken (16) in Öffnungen (17) am Zugmittel (6a; 6b) eingreifen können zum Synchronisieren des Antriebsrades (5) und des Zugmittels (6a; 6b).

18. Antriebseinheit (1) nach einem der vorhergehenden Ansprüche, **dadurch gekennzeichnet, dass** das Antriebsrad (5) verdrehfest auf einer Welle (4) der Förderschnecke (3) befestigt ist.

19. Kornelevator-Anordnung (20), insbesondere für landwirtschaftliche Maschinen, mit einem Kornelevator (2) und einer Antriebseinheit (1) nach einem der vorhergehenden Ansprüche, wobei das Antriebsrad (5) der Antriebseinheit (1) mit dem endlosen Zugmittel (6a; 6b) des Kornelevators (2) derartig formschlüssig und/oder kraftschlüssig in Eingriff steht, dass durch ein Verdrehen der Förderschnecke (3) sowie des damit in Wirkverbindung stehenden Antriebsrades (5) auch das endlose Zugmittel (6a; 6b) angetrieben wird, wobei dadurch von der Förderschnecke (3) in den Kornelevator (2) gefördertes Saatgut durch die Paddels (8) auf dem endlosen Zugmittel (6a; 6b) durch den Kornelevator (2) gefördert werden kann, wobei aufgrund der mehreren Durchtrittsöffnungen (13) ein Durchströmen von durch die Förderschnecke (3) in den Kornelevator (2) gefördertem Saatgut durch das Antriebsrad (5) hindurch ermöglicht und/oder begünstigt wird.

20. Kornelevator-Anordnung (20) nach Anspruch 19, **dadurch gekennzeichnet, dass** das endlose Zugmittel ein Nockenriemen (6a) mit Nocken (7a) und dazwischenliegenden Lücken (7b) ist, wobei die Nocken (7a) in die Zwischenräume (14) zwischen den Mitnahmemitteln (11; 10c) formschlüssig eingreifen können, um die Nocken (7a) des Nockenriemens (6a) durch das angetriebene Antriebsrad (5) mitzunehmen und den Nockenriemen (6a) des Kornelevators (2) dadurch anzutreiben.

21. Kornelevator-Anordnung (20) nach Anspruch 19, **dadurch gekennzeichnet, dass** das endlose Zugmittel als Flachriemen (6b) ausgeführt ist, der mit den Mitnahmemitteln (11; 10c) des Antriebsrades (5) reibschlüssig in Eingriff steht, um den Flachriemen (6b) mitzunehmen und den Flachriemen (6b) des Kornelevators (2) dadurch anzutreiben.

## Claims

1. Drive unit (1) for a grain elevator (2), in particular for agricultural machines, comprising a drive wheel (5) which is operatively connected to a screw conveyor (3) for conveying crop into the grain elevator (2), wherein the drive wheel (5) is mounted, resistant against rotation, on a shaft (4) of the screw conveyor (3), so that the drive wheel (5) can rotate together with the screw conveyor (3) about a longitudinal axis (A), wherein the drive wheel (5) comprises retainers (11; 10c), which can be brought into positive locking and/or friction engagement with endless traction means (6a; 6b) of the grain elevator (2) having a plurality of paddles (8) for driving the endless traction means (6a; 6b), **characterised in that** in the drive wheel (5), between arms (10) holding the retainers (11; 10c), a plurality of openings (13) are formed so as to enable and/or facilitate crop conveyed through the screw conveyor (3) into the grain elevator (2) along a direction of conveyance (F) to flow through the drive wheel (5) .

2. Drive unit (1) according to claim 1, **characterised in that** the drive wheel (5) comprises as retainers pins (11) having a rounded and/or bevelled and/or rectangular cross section, which are held perimetrically by the arms (10), and wherein gaps (14) are provided between the pins (11), so that
- cams (7a) of a continuous tension device designed as a cam belt (6a) can positive lockingly engage with the gaps (14) in order to retain the cams (7a) by the drive wheel (5) driven and to thereby drive the cam belt (6a) of the grain elevator (2), or
- a continuous tension device designed as a flat belt (6b) can friction engage with the pins (11) so as to retain the flat belt (6b) to thereby drive the flat belt (6b) of the grain elevator (2).

3. Drive unit (1) according to claim 1, **characterised in that** the arms (10) of the drive wheel (5) are provided each with a re-shaped end (10c), wherein the re-shaped ends (10c) form the retainer, wherein the re-shaped ends (10c) are each disposed on the same perimeter and a gap (14) is formed between adjacent re-shaped ends (10c), so that
- cams (7a) of a continuous tension device designed as a cam belt (6a) can positive lockingly engage with the gaps (14) in order to retain the cams (7a) by the drive wheel (5) driven and to thereby drive the cam belt (6a) of the grain elevator (2), or
- a continuous tension device designed as a flat belt (6b) can friction engage with the re-shaped ends (10c) so as to retain the flat belt (6b) and to thereby drive the flat belt (6b) of the grain elevator (2).

4. Drive unit (1) according to claim 2 or claim 3, **characterised in that** the gaps (14) are connected to the openings (13) so as to prevent crop becoming jammed between the continuous tension device (6a; 6b) and the drive wheel (5) .

5. Dive unit (1) according to any one of the preceding claims, **characterised in that** the arms (10) are designed flat whereby lateral faces (10b) of the arms (10) are aligned in parallel or angled in relation to the direction of conveyance (F) of the crop and extend starting from a hub (9) of the drive wheel (5) outwards in a radial direction and are connected, at the outer ends (10a) of which, to at least one of the retainers (11; 10c).

6. Drive unit (1) according to claim 5, **characterised in that** the lateral faces (10b) of the arms (10) are wound about an angle (α) of between 5° and 75°, preferably 65°, in particular corresponding to a helical gearing (3a) of the screw conveyor (3) in relation to a longitudinal axis (A) running through the hub (9) of the drive wheel (5) so as to facilitate conveyance of the crop through the openings (3) of the drive wheel (5).

7. Drive unit (1) according to claim 5, **characterised in that** the arms (10) are additionally wound.

8. Drive unit (1) according to any one of claims 1 to 4, **characterised in that** the arms (10) are provided with a rounded and/or bevelled and/or rectangular cross sectional surface and extend starting from a hub (9) of the drive wheel (5) outward in a radial direction and are connected, at the outer ends (10a) of which, to at least one of the retainers (11; 10c).

9. Drive unit (1) according to any one of the preceding claims, **characterised in that** a unit comprising arm (10) and the retainers (11; 10c) connected forms an L-shape or a T-shape wherein, to that end, the respective retainer (11; 10c) protrudes on one side or both sides in an axial and/or radial direction from the arm (10).

10. Drive unit (1) according to any one of the preceding claims, **characterised in that** the retainer (11) tapers in an axial direction towards the outside.

11. Drive unit (1) according to any one of the preceding claims, **characterised in that** guide ribs (15) angled and/or wound in relation to a longitudinal axis (A) running through the hub (9) of the drive wheel (5) are arranged in the region of the openings (13) so as to facilitate conveyance of the crop through the openings (13) of the drive wheel (5).

12. Drive unit (1) according to any one of the preceding claims, **characterised in that** the openings (13) account for a share of between 30% and 85%, preferably 65%, of the surface covered by the drive wheel (5).

13. Drive unit (1) according to any one of the preceding claims, **characterised in that** a hub exterior (9a) of the hub (9) of the drive wheel (5) is designed, at least in part, to be sloped in an axial direction, the hub exterior (9a), at least in part, in a first region (9b) of the hub (9) facing the screw conveyor (3), being designed as sloped axially outwards towards the screw conveyor (3) so as to prevent blocking of crop in front of the drive wheel (5).

14. Drive unit (1) according to any one of the preceding claims, **characterised in that** a hub exterior (9a) of a hub (9) of the drive wheel (5) is designed, at least in part, to be sloped, the hub exterior (9a), at least in part, in a second region (9c) of the hub (9) facing away from the screw conveyor (3), being designed as sloped axially outwards away from the screw conveyor (3) so as to prevent jamming of crop in the drive wheel (5).

15. Drive unit (1) according to any one of the preceding claims, **characterised in that** the drive wheel (5) further comprises at least one washer disc (12) connected at an end to the retainer (11; 10c), the washer disc (12) protruding outwards in a radial direction beyond the retainers (11; 10c) in such a way that the continuous tension device (6a; 6b) mounted on the drive wheel (5) is guided in an axial direction.

16. Drive unit (1) according to claim 15, **characterised in that** a retainer (11) is disposed on the washer disc (12) which is not directly held by one of the arms, the retainer (11) being disposed on the same perimeter as the retainer (11) directly held by the arms (10).

17. Drive unit (1) according to any one of the preceding claims, **characterised in that** guide cams (16) protruding radially outwards are disposed on the retainers (11; 10c), the guide cams (16) being able to engage in openings (17) on the tension device (6a; 6b) for synchronizing the drive wheel (5) and the tension device (6a; 6b).

18. Drive unit (1) according to any one of the preceding claims, **characterised in that** the drive wheel (5) is mounted, resistant against rotation, on a shaft (4) of the screw conveyor (3).

19. Grain elevator arrangement (20), in particular for agricultural machines, comprising a grain elevator (2) and a drive unit (1) according to any one of the preceding claims, the drive wheel (5) of the drive unit (1) engaging with the continuous tension device (6a; 6b) of the grain elevator (2) in friction and/or a positive locking connection in such a way that any rotation of the screw conveyor (3) as well as the drive wheel (5) operatively connected thereto also drives the continuous tension device (6a; 6b), whereby, hereby, crop conveyed by the screw conveyor (3) into the grain elevator (2) may be conveyed by the paddles (8) on the continuous tension device (6a; 6b) through the grain elevator (2), whereby the plurality of openings (13) enable and/or facilitate a flow of crop conveyed by the screw conveyor (3) into the grain elevator (2) through the drive wheel (5).

20. Grain elevator arrangement (20) according to claim 19, **characterised in that** the continuous tension device is designed as a cam belt (6a) provided with cams (7a) and gaps (7b) located in-between, the cams (7a) being able to engage with the gaps (14) between the retainers (11; 10c) in a positive locking manner so as to retain the cams (7a) of the cam belt (6a) by the drive wheel (5) driven and to thereby drive the cam belt (6a) of the grain elevator (2).

21. Grain elevator arrangement (20) according to claim 19, **characterised in that** the continuous tension device is designed as a flat belt (6b) being frictionally engaged with the retainer (11; 10c) of the drive wheel (5) so as to retain the flat belt (6b) and to thereby drive the flat belt (6b) of the grain elevator (2).

## Revendications

1. Unité d'entraînement (1) pour un élévateur à grain (2), en particulier pour des machines agricoles, avec une roue d'entraînement (5) qui est reliée fonctionnellement à une vis transporteuse (3) pour le transport de semence dans l'élévateur à grain (2), la roue d'entraînement (5) étant fixée solidaire en rotation sur un arbre (4) de la vis transporteuse (3) de sorte que la roue d'entraînement (5) peut tourner avec la vis transporteuse (3) autour d'un axe longitudinal (A), la roue d'entraînement (5) présentant des moyens d'entraînement (11, 10c) pouvant être mis en prise par coopération de formes ou par friction avec un moyen de traction sans fin (6a, 6b) de l'élévateur à grain (2), moyen de traction sans fin qui présente plusieurs palettes (8) pour l'entraînement du moyen de traction sans fin (6a, 6b),
**caractérisée en ce que**
des ouvertures de passage (13) sont formées dans la roue d'entraînement (5), entre les bras (10) maintenant les moyens d'entraînement (11, 10c), de sorte à permettre ou favoriser un écoulement de semence transportée par la vis transporteuse (3) dans l'élévateur à grain (2) le long d'une direction de transport (F) à travers la roue d'entraînement (5).

2. Unité d'entraînement (1) suivant la revendication 1, **caractérisée en ce que** la roue d'entraînement (5) présente des boulons (11) d'une section transversale arrondie et/ou biseautée et/ou rectangulaire comme moyens d'entraînement qui sont maintenus sur leur périphérie par les bras (10), et **en ce que** des espaces intermédiaires (14) sont formés entre les boulons (11) de sorte que
- les crans (7a) d'un moyen de traction sans fin conçu comme courroie crantée (6a) peuvent prendre par coopération de formes dans les espaces intermédiaires (14) pour l'entraînement du cran (7a) par la roue d'entraînement entraînée (5) et, par conséquent, pour entraîner la courroie crantée (6a) de l'élévateur à grain (2), ou
- un moyen de traction sans fin conçu comme courroie plate (6b) peut venir en prise par friction avec les boulons (11) pour l'entraînement de la courroie plate (6b) et, par conséquent, pour entraîner la courroie plate (6b) de l'élévateur à grain (2).

3. Unité d'entraînement (1) suivant la revendication 1, **caractérisée en ce que** les bras (10) de la roue d'entraînement (5) présentent respectivement une extrémité repliée (10c), les extrémités repliées (10c) formant le moyen d'entraînement, les extrémités repliées (10c) étant disposées respectivement sur la même périphérie et un espace intermédiaire (14) étant formé entre des extrémités repliées voisines (10c) de sorte que
- des crans (7a) d'un moyen de traction sans fin conçu comme courroie crantée (6a) peuvent prendre par coopération de formes dans les espaces intermédiaires (14) pour l'entraînement du cran (7a) par la roue d'entraînement entraînée et, par conséquent, pour entraîner la courroie crantée (6a) de l'élévateur à grain (2) ou
- un moyen de traction sans fin conçu comme courroie plate (6b) peut venir en prise par friction avec les extrémités repliées (10c) pour l'entraînement de la courroie plate (6b) et, par conséquent, pour entraîner la courroie plate (6b) de l'élévateur à grain.

4. Unité d'entraînement (1) suivant la revendication 2 ou 3, **caractérisée en ce que** les espaces intermédiaires (14) sont reliés aux ouvertures de passage (13) pour empêcher un coincement de semence entre le moyen de traction sans fin (6a, 6b) et la roue d'entraînement (5).

5. Unité d'entraînement (1) suivant une des revendications précédentes, **caractérisée en ce que** les bras sont conçus en forme plate, des faces latérales (10b) des bras (10) étant orientées de façon parallèle ou inclinée par rapport à la direction de transport (F) de la semence et s'étendant radialement vers l'extérieur à partir d'un moyeu (9) de la roue d'entraînement (5) et étant reliés aux extrémités extérieures (10a) de celle-ci à au moins un des moyens d'entraînement (11, 10c).

6. Unité d'entraînement (1) suivant la revendication 5, **caractérisée en ce que** les faces latérales (10b) des bras (10) sont pivotées d'un angle (α) compris entre 5° et 75°, de préférence de 65°, correspondant en particulier à une denture hélicoïdale (3a) de la vis transporteuse en forme d'hélice (3), par rapport à un axe longitudinal (A) s'étendant à travers le moyeu (9) de la roue d'entraînement (5) pour favoriser le transport de la semence à travers les ouvertures de passage (13) de la roue d'entraînement (5).

7. Unité d'entraînement (1) suivant la revendication 5 ou 6, **caractérisée en ce que** les bras (10) sont en plus vrillés.

8. Unité d'entraînement (1) suivant une des revendications 1 à 4, **caractérisée en ce que** les bras (10) présentent une superficie de section arrondie et/ou biseautée et/ou rectangulaire et s'étendent radialement vers l'extérieur à partir d'un moyeu (9) de la roue d'entraînement (5) et sont reliés aux extrémités extérieures (10a) de celui-ci à au moins un des moyens d'entraînement (11, 10c).

9. Unité d'entraînement (1) suivant une des revendications précédentes, **caractérisée en ce qu'**un ensemble constitué par un bras (10) et un moyen d'entraînement (11, 10c) relié à celui-ci définit une forme en L ou une forme en T, le moyen d'entraînement respectif (11, 10c) faisant saillie radialement à partir du bras (10) sur un côté ou les deux côtés.

10. Unité d'entraînement (1) suivant une des revendications précédentes, **caractérisée en ce que** les moyens d'entraînement (11) diminuent axialement vers l'extérieur.

11. Unité d'entraînement (1) suivant une des revendications précédentes, **caractérisée en ce que** des nervures de guidage (15) inclinées et/ou vrillées sont disposées dans la zone des ouvertures de passage (13), à l'opposé d'un axe longitudinal s'étendant à travers le moyeu (9) de la roue d'entraînement (5) pour favoriser un transport de semence à travers les ouvertures de passage (13) de la roue d'entraînement (5).

12. Unité d'entraînement (1) suivant une des revendications précédentes, **caractérisée en ce que** les ouvertures de passage (13) constituent une part comprise entre 30% et 85%, de préférence 65% de la surface couverte par la roue d'entraînement.

13. Unité d'entraînement (1) suivant une des revendications précédentes, **caractérisée en ce qu'**une face de moyeu extérieure (9a) du moyeu (9) de la roue d'entraînement (5) est conçue biseautée au moins par zones dans la direction axiale, la face de moyeu extérieure (9a) étant, dans une première zone (9b) du moyeu (9) orientée vers la vis transporteuse (3), conçue au moins partiellement de sorte à diminuer axialement vers l'extérieur, vers la vis de transport (3) pour empêcher un blocage de semence devant la roue d'entraînement (5).

14. Unité d'entraînement (1) suivant une des revendications précédentes, **caractérisée en ce qu'**une face de moyeu extérieure (9a) du moyeu (9) de la roue d'entraînement (5) est conçue biseautée dans la direction axiale au moins par zones, la face de moyeu extérieure (9a) étant, dans une seconde zone (9c) du moyeu (9) du moyeu (9) orientée de façon à s'éloigner de la vis transporteuse (3), conçue au moins partiellement de sorte à diminuer axialement vers l'extérieur en s'éloignant de la vis de transport (3) pour empêcher un coincement de semence dans la roue d'entraînement (5).

15. Unité d'entraînement (1) suivant une des revendications précédentes, **caractérisée en ce que** la roue d'entraînement (5) présente en plus au moins une rondelle (12) qui est reliée, côté extrémité, aux moyens d'entraînement (11, 10c), la rondelle (12) faisant saillie radialement vers l'extérieur à partir des moyens d'entraînement (11, 10c) de sorte qu'un moyen de traction sans fin (6a, 6b) tendu sur la roue d'entraînement (5) est guidé dans la direction axiale.

16. Unité d'entraînement (1) suivant une des revendications précédentes, **caractérisée en ce** des moyens d'entraînement (11), qui ne sont pas directement maintenus par un des bras (10), sont disposés sur la rondelle (12), ces moyens d'entraînement (11) étant situés sur la même périphérie que les moyens d'entraînement (11) directement maintenus par les bras (10).

17. Unité d'entraînement (1) suivant une des revendications précédentes, **caractérisée en ce que** des ergots de guidage (16) faisant saillie radialement vers l'extérieur sont disposés sur les moyens d'entraînement (11, 10c), les ergots de guidage (16) pouvant prendre dans des ouvertures (17) dans le moyen de traction (6a, 6b) pour la synchronisation de la roue d'entraînement (5) et du moyen de traction (6a, 6b).

18. Unité d'entraînement (1) suivant une des revendications précédentes, **caractérisée en ce que** la roue d'entraînement (5) est fixée de manière résistante à la torsion sur un arbre (4) de la vis transporteuse (3).

19. Agencement d'élévateur à grain (20), en particulier pour des machines agricoles, avec un élévateur à grain (2) et une unité d'entraînement (1) suivant une des revendications précédentes, la roue d'entraînement (5) de l'unité d'entraînement (1) étant en prise par coopération de formes et/ou par adhérence avec le moyen de traction sans fin (6a, 6b) de l'élévateur à grain (2) de sorte qu'une rotation de la vis transporteuse (3), ainsi que de la roue d'entraînement (5), avec laquelle elle est en liaison d'actionnement, entraîne également le moyen de traction (6a, 6b), ce qui permet, par conséquent, de transporter la semence transportée par la vis transporteuse (3) dans l'élévateur à grain (2) par l'intermédiaire des palettes (8) sur le moyen de traction sans fin (6a, 6b) à travers l'élévateur à grain, les plusieurs ouvertures de passage (13) permettant ou favorisant, un écoulement de semence transportée dans l'élévateur à grain (2) par la vis transporteuse (3) à travers la roue d'entraînement (5).

20. Agencement d'élévateur à grain (20) suivant la revendication 19, **caractérisé en ce que** le moyen de traction sans fin est une courroie crantée (6a) avec des crans (7a) et des interstices intermédiaires (7b), les crans (7a) pouvant prendre par coopération de formes dans les interstices (14) entre les moyens d'entraînement (11, 10c) pour l'entraînement des crans (7a) de la courroie crantée (6a) par la roue d'entraînement (5) entraînée et, par conséquent, pour entraîner la courroie crantée (6a) de l'élévateur à grain (2).

21. Agencement d'élévateur à grain (20) suivant la revendication 19, **caractérisé en ce que** le moyen de traction sans fin est conçu comme courroie plate (6b) qui est en prise par friction avec les moyens d'entraînement (11, 10c) de la roue d'entraînement (5) pour l'entraînement de la courroie plate (6b) et, par conséquent, pour entraîner la courroie plate (6b) de l'élévateur à grain (2).
